(19) **Europäisches Patentamt / European Patent Office / Office européen des brevets**

(11) **EP 1 680 347 B1**

(12) **EUROPEAN PATENT SPECIFICATION**

(45) Date of publication and mention
of the grant of the patent:
**03.09.2008 Bulletin 2008/36**

(21) Application number: **04767129.2**

(22) Date of filing: **20.10.2004**

(51) Int Cl.:
**B66B 21/02** *(2006.01)*     **B66B 21/10** *(2006.01)*

(86) International application number:
**PCT/FI2004/000621**

(87) International publication number:
**WO 2005/042391 (12.05.2005 Gazette 2005/19)**

(54) **TURNING DEVICE FOR CONVEYOR**

UMDREHVORRICHTUNG FÜR FÖRDEREINRICHTUNG

DISPOSITIF ROTATIF POUR TRANSPORTEUR

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **03.11.2003 FI 20031590**

(43) Date of publication of application:
**19.07.2006 Bulletin 2006/29**

(73) Proprietor: **Kone Oyj (Kone Corporation)**
**00330 Helsinki (FI)**

(72) Inventors:
• **MUSTALAHTI, Jorma**
**FI-05620 Hyvinkää (FI)**
• **AULANKO, Esko**
**FI-04230 Kerava (FI)**

(74) Representative: **Zipse Habersack Kritzenberger**
**Patentanwälte**
**Wotanstraße 64**
**80639 München (DE)**

(56) References cited:
**EP-A- 0 083 500        EP-A- 1 258 447**
**GB-A- 2 299 316**

## Description

The present invention relates to a method as defined in the preamble of claim 1 and to an apparatus as defined in the preamble of claim 5 for changing the direction of motion of a pallet at the end of a transport conveyor or equivalent.

Like escalators, transport conveyors are transport devices designed to move people or goods. They differ from escalators e.g. in that they are often operated in a substantially horizontal position or in a position somewhat inclined relative to their direction of motion, typically e.g. by 1-15°, so that successive steps, i.e. pallets form a substantially even and linear track instead of stair-like steps as in the case of escalators. Instead of successive steps, transport conveyors may also have a continuous belt, in which case the transport conveyor resembles a belt conveyor. Transport conveyors are also called moving walkways and autowalks.

In prior-art transport conveyors, the structure is embedded in the ground or in the floor of the building. In this case, a pit about one meter deep and several meters long is provided at either end of the transport conveyor for the drive machinery of the transport conveyor structure and for the mechanism turning the pallets. Correspondingly, the depth of the recess needed in the middle part of the transport conveyor is about half a meter. A drawback with this type of transport conveyor constructions is that they require heavy and fixed structures in the floor of the surrounding space and these have to be taken into account already when the buildings are being designed. A further drawback is that transferring fixed structures like this from one place to another according to changing traffic needs is completely impossible.

In prior-art solutions, the pallet track typically consists of pallets that are about 15...40 cm long, corresponding to the steps of escalators. The pallets are chained together usually by means of a chain or e.g. a cogged belt, and the whole chain is driven around by a machine and a chain sprocket so that the upper pallets in the chain move on rollers supported by a special race track. At the end of the pallet track, at the end of the race track, the pallets turn upside down around a wheel of a large diameter and return back to the beginning of the race track by the lower side of the said track. At the beginning of the track, the pallets again turn around to their normal traveling position and move further on the upper side of the track towards the end of the race track.

One of the problems with a prior-art solution like this is the turning of the pallet at the ends, because the height of the turning space has to be at least equal to the length of the pallet. In practice, however, the height is about 1.5...2 times the length of the pallet because otherwise the operation will not be smooth enough.

In British patent specification no. GB2299316, Fig. 1/3 presents a structure of the above-described type as an example of prior art. In addition, this patent specification discloses a transport conveyor construction wherein the pallets are guided by fixed tracks at their turning points while being continuously held in a horizontal position. Thus, the pallet is not turned upside down at the turning point. Actual control is effected by means of a curved track by the leading wheels in the direction of motion of the pallet while the trailing wheels are substantially free. However, this solution disclosed by the GB patent specification involves the problem that the track has so-called dead centers at its end points where the position of the pallet is not completely exactly defined. As a consequence, the pallet may get jammed at the dead center, causing the entire apparatus to stop as a result of the operation disturbance and may even be damaged. The risk of jamming is increased by the running clearances, non-ideal track properties and wear of the mechanism.

The object of the present invention is to overcome the above-mentioned drawbacks and to create a method and an apparatus for changing the direction of motion at the end of a transport conveyor or equivalent that is simple in mechanical construction and reliable in operation. A further object of the invention is to create a transport conveyor structure of a low construction that can be mounted directly on a base, e.g. on a floor. The method of the invention is characterized by what is disclosed in the characterization part of claim 1, and the apparatus of the invention is characterized by what is disclosed in the characterization part of claim 5. Other embodiments of the invention are characterized by what is disclosed in the other claims.

The method and apparatus of the invention, in short the solution of the invention, has the advantage that its low construction height allows the transport conveyor structure to be mounted directly on the base. At its lowest, the total height of the transport conveyor structure is only slightly greater than the height of two pallets, because the returning pallets must be provided a space to move under the pallets above. The base may be e.g. an asphalt or concrete surface either outside or inside a building. The structure does not require any pit or corresponding space specifically made for it at all, so the solution of the invention is advantageous in respect of costs and flexible in regard of disposition in a desired place. Moreover, if necessary, the transport conveyor structure of the invention can be moved to another place with minor variations and at a low cost. A further advantage is that the solution of the invention makes it possible to achieve a light construction such that the floor under the transport conveyor forms the final reinforcement of the structure.

Yet another advantage is that, due to the solution of the invention, the pallet will not be jammed at any point during the turning movement, so the structure works reliably and no operation disturbances due to jamming occur. An additional advantage is that, during the direction-changing phase, the pallet is always moved from one level to the other by the trailing wheels relative to the current direction of motion, i.e. alternately by "front wheels" and by "rear wheels". This together with the fact that both the pallet and the track have a mirror image-like structure in the longitudinal direction of the track makes it possible to achieve a simple construction that allows the pallets to be driven equally well in both clockwise and anti-clockwise directions. Moving the pallets by the wheels also provides the advantage that, during the direction-changing phase, the paths of motion of the pallet are accurate and the operation is quiet due to a continuous hold. In addition, no extra clatter occurs during the direction-changing phase because an idler moving the pallets is contact with pallet bearing wheels provided with a soft surface layer.

In the following, the invention will be described in detail with reference to an embodiment example and the attached drawings, wherein

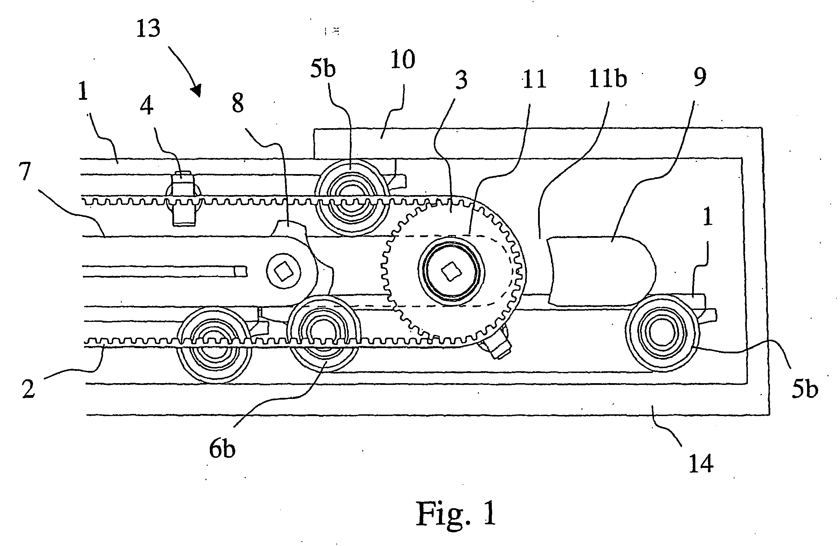

Fig. 1    presents a side view of the exit end of the transport conveyor structure of the invention,

Fig. 2    presents a sectional side view of the exit end of the transport conveyor structure of the invention at one stage,

Fig. 3    presents a sectional side view of the exit end of the transport conveyor structure of the invention at another stage, and

Fig. 4    presents a top view of the exit end of the transport conveyor structure of the invention.

The transport conveyor structure 13 of the invention comprises a frame structure 14, whose function is to hold the equipment together and transmit the forces to the base under it. Inside the frame structure is a pallet track, on the upper surface of which the passengers stand. In addition, the transport conveyor structure comprises at least a pallet track drive machine including a drive sprocket 3 and a cogged belt 2, as well as handrails and their drive machine.

The pallet track consists of separate pallets 1 provided with wheels, with front wheels 5a and 5b located at the front corners of the pallet relative to the normal direction of transport of the transport conveyor and rear wheels 6a and 6b located at the rear corners of the pallet. Front wheel 5a is located at a front corner at a position removed outward by a certain distance relative to the corresponding rear wheel 6a on the same side of the pallet. Similarly, the rear wheel 6b on the other side of the pallet is located at a rear corner at a position removed outward by a certain distance relative to the corresponding front wheel 5b on the same side of the pallet. This certain distance is in both cases of substantially equal length and at the same time such that it allows rear wheel 6a to fall onto the return track and likewise front wheel 5b to rise onto the upper track 7 at the other end of the transport conveyor. Before descending onto the return track, the pallet is supported through some distance by at least three wheels 5a, 6a and 6b.

Moreover, each side edge of the pallets 1 is provided with a fastening element 4 placed at about the middle part of the pallet relative to its direction of motion for fastening the pallet by its side edge to the cogged belt 2. The pallet 1 is fastened to the cogged belt 2 in such a way that the fastening element 4 allows the pallet to remain oriented in the same direction, i.e. with the grooved supporting surface facing substantially upwards throughout the direction-changing phase.

The pallets 1 carrying passengers, driven by the cogged belt 2 and supported by their wheels 5 and 6, move along the upper tracks 7, whereas the pallets moving in the return direction, supported by the same wheels, move along a race track in the lower part of the frame structure 14. At the end of the transport conveyor, the forward edge of the pallet goes under a so-called foot board 10, which is usually a comb blade. At about the same point, the normal track 7 narrows on one side of the transport conveyor into a track extension 11, so that when the rear wheel 6a reaches that point, the normal track 7 provides no support for it. Therefore, in the region of the extension 11, the rear wheel 6a can freely move through a passage opening 11a onto the return track. The track extension 11 extends as a narrower track and is located on the line of motion of the outer wheel 5a at the front edge of the pallet, at substantially the same level with the track 7. Thus, the outer front wheel 5a is supported on the extension 11 to prevent tilting of the front end of the pallet at the beginning of the direction-changing phase. The distance of the rear wheel 6a on the corresponding side of the pallet from the side edge of the pallet has been so chosen that it is smaller than the distance of the front wheel 5a so that the rear wheel 6a does not extend onto the track extension 11. Consequently, the extension 11 does not prevent the rear part of the pallet from descending through the passage opening 11a to the level of the race track in the frame structure 14 during the direction-changing phase.

The transport conveyor may have a corresponding track structure at the entry end of the pallet track as well, in which case the structure is a longitudinal mirror image of the exit end structure described above. At the entry end, rear wheel 6b is supported on a corresponding extension and front wheel 5b can rise to its upper position by the front end of the beginning of the track, where a suitable opening is provided for the front wheel 5b located closer to the inner edge of the pallet. As the entry end structure is substantially identical to the structure of the exit end, the entry end is not shown separately in the drawings.

Placed at the forward end of the each track 7 is an idler 8 functioning as a supporting element supporting the rear end of the pallet 1. The idler forms an extension of the track and is mounted on an axle so as to be freely rotatable. The idler 8 is of an indented wheel design such that the idler 8 has e.g. four indentations 12 having the shape of a circular arc corresponding to the wheels 5a, 5b and 6a, 6b of the pallet 1, which indentations first receive the front wheels 5a, 5b and then the rear wheels 6a, 6b of the pallet as it passes over the idler 8 at the exit or second end of the transport conveyor so that the idler 8 is always in engagement with wheels of at least three pallets. At the same time, the idler 8 moves the rear end of the pallet 1 downwards past a possible dead center when the direction of motion of the pallet is being changed. The idler 8 receives its drive from the next pallet, whose front wheel 5a, 5b causes the idler to go on rotating. The placement and structure of the idler 8, the distances between successive indentations as well as the width of the idler have been so chosen that both the front wheel 5a, 5b and the rear wheel 6a, 6b of the pallet 1 are received in turn in the idler indentations 12, whose radius of curvature is at least equal to but preferably somewhat larger than the radius of the wheels 5a, 5b and 6a, 6b of the pallet. Since the idler 8 rotated under positive control supports the rear end of the pallet at the exit end of the transport conveyor and controls its movement during the change of direction, the position of the pallet is accurately controlled throughout the direction-changing phase, so the motion of the pallet can not get jammed at any point during the change of direction.

The dimensions of a construction comprising an idler 8 with four indentations are bound by the following equation:

$$L = 1/2 * (p-^{\pi}/2 * r),$$

where

L = distance of the rotational center of the idler 8 from the rotational center of the drive sprocket 3; it is also the distance of the hub of the wheels 5 and 6 from the fastening element 4 of the pallet 1
p = distance between the fastening elements 4 of succes-sive pallets, preferably as an even number of cogs or chain elements
r = radius of the sprocket.

After the track extension 11 in the direction of motion of the pallet track there is a passage opening 11b, whose position and length have been so chosen that the pallet fastening element 4 can move through the passage opening 4 from the upper position to the lower position during direction change. Similarly, on the other side of the transport conveyor, directly opposite to the track extension 11 and passage opening 11b, there is a passage opening 11c preferably extending to the first end of a rest bar 9 located at a distance from the idler 8 at the end of the track. During the change of direction of the pallet, rear wheel 6b and the second fastening element 4 move through passage opening 11c from the upper level to the lower level.

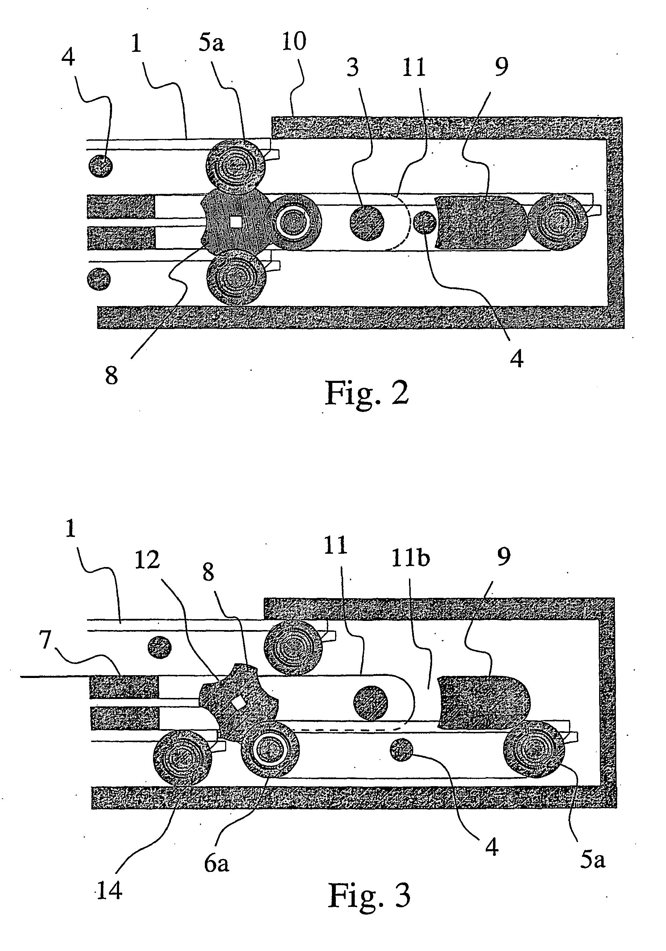

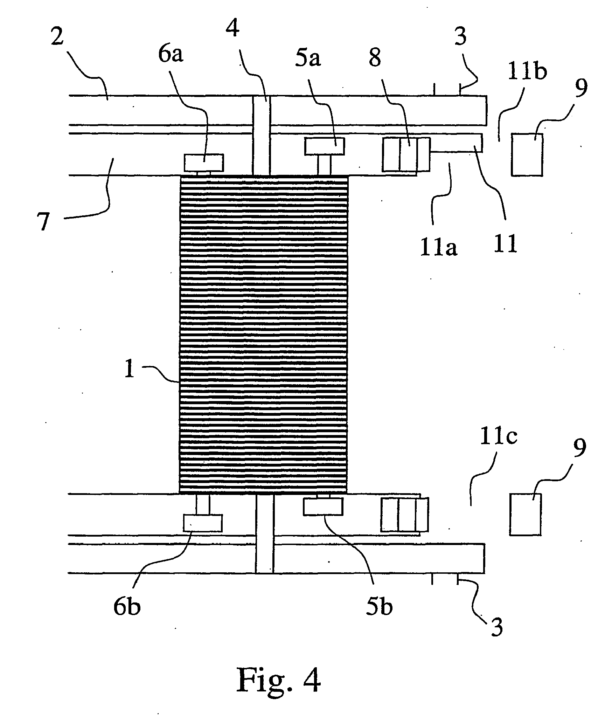

The length of the bearing surface of the rest bars 9 located after the passage openings 11b and 11c in the direction of motion of the pallet track has been so chosen that the pallet's front wheels 5a, 5b supported by the rest bar 9 can move around the rounded front end of the rest bar 9 from the upper position of the pallet to the lower position of the pallet to the level of the inner surface of the bottom of the frame structure 14. The drive sprocket 3, which in Fig. 2, 3 and 4 is only represented by the shaft of the drive sprocket, is placed between the idlers 8 and the rest bars 9 as seen in the direction of motion of the pallets 1.

The endless cogged belt 2 runs around the castellated drive sprocket 3 of the drive machine at each end of the track. The drive sprocket 3 is driven by the drive machine, which is not presented in the figures. The pallets 1 attached to the cogged belt 2 move together with the cogged belt, forming an endless track for transporting passengers from the entry end of the transport conveyor to the exit end of the transport conveyor.

As stated above, the structure of the apparatus at the entry end of the transport conveyor is identical to the above-described structure of the exit end of the transport conveyor. At the entry end, the pallet is guided from its lower position to the upper position by positive control as described above. In this case, the pallet's front wheels 5a, 5b, which in this direction of motion are the trailing wheels, are supported by the idlers 8, and the front end of each pallet is raised under positive control from the lower level to the transport level, in other words, the pallet is raised in a substantially horizontal plane to the track level 7. Due to the positive operation, the apparatus works without any jamming problems in both directions of motion.

By the method of the invention, the direction of motion of the pallet 1 is changed while keeping the pallet in substantially the same attitude throughout the direction-changing phase in such manner that during direction change the trailing end of the pallet 1 relative to the current direction of motion is guided by positive control from the level of the current direction of motion to the other level. In more accurate terms, during direction change the trailing end of the pallet 1 as seen in the direction of motion is guided by positive control by means of the idler 8 from the level of the current direction of motion to the other level. The control of the motion is facilitated by the fact that during direction change the idler 8 is positively rotated by those wheels 5a, 5b or 6a, 6b of the pallet immediately following the one whose direction of motion is being changed that come foremost in the current direction of motion.

In the above, the same attitude of the pallet 1 means that pallet is never turned upside down, but the pallet is moved from one level to the other in a substantially horizontal position, although a slight inclination in the forward or backward direction relative to the direction of motion is possible.

It is obvious to the person skilled in the art that the invention is not limited to the example described above, but that it may be varied within the scope of the claims presented below. Thus, for example, instead of a cogged belt, the power transmission means used may consist of a suitable different type of belt, chain or, with certain limitations, even rope or equivalent. In this case, instead of a sprocket, the drive wheel 3 may be e.g. a chain wheel. For example, a chain is often easier to attach to a pallet and a chain construction is narrower than a cogged belt construction.

Likewise, the connecting element 4 may have a different structure and be differently attached to the cogged belt or equivalent than in the above description. The essential point is that the connecting element allows the pallet to remain in substantially the same attitude even if the cogged belt or other power transmission means itself turns upside down.

The structure supporting the front wheels of the pallet, i.e. in the first place the track extension 11 at the exit end of the track may also differ from that described above. For example, the motion of the rear end of the pallet may be controlled by a suitable guide structure so that the rear end can not rise upwards, thus also preventing the front end from moving downwards.

In addition, it is obvious that, instead of being used in a horizontal operating position, the above-described transport conveyor structure can also be used in upwards or downwards inclined positions, for example in auto ramps or equivalent.

It is further obvious to the skilled person that the leading ends of the pallets in the direction of motion can also be guided by a curved track. This structure works well especially when the pallet is rising from the lower level to the upper level.

It is likewise obvious to the skilled person that, instead of being driven by the pallet coming after the one whose direction of motion is being changed, the idler 8 can be driven in other ways; for example by a separate drive machine or by the drive machine or equivalent of the pallet track. The idlers 8 can be controlled synchronously e.g. from the drive sprocket 3 so that the pallet 1 remains in a horizontal position while the idler 8 is turning. The transmission between the drive sprocket 3 and the idler 8 can be implemented e.g. using cogged belt transmission, which can guarantee synchronous mutual motion of the drive sprocket 3 and the idler 8. When synchronous control of the supporting device 8 is used, the wheels 5 and 6 of the pallet need not necessarily be located at the corners of the pallet at a distance from each other that is equal to the radius of turn on the drive sprocket 3.

It is further obvious to the skilled person that the idlers 8 may have a shape differing from that described above. Instead of rounded-bottom indentations, the idler may have V-shaped or similar indentations, in which case the idler may resemble e.g. a four-blade impeller with a small hub. Similarly, instead of four indentations, the idler may also have three indentations. In this case, the distance of the wheel of the pallet from the rotational center of the idler with three indentations will change during the contact. It is still preferable that wheels of three pallets are always simultaneously in contact with the idler.

In addition, instead of guiding the pallet by engaging the currently trailing wheel, the idler 8 may also guide the pallet by engaging some other suitable part, e.g. by a special shape of the bottom of the pallet or by a corresponding part.

## Claims

1. A method for changing the direction of motion of a pallet (1) moving on wheels (5a, 5b, 6a, 6b) at the end of a transport conveyor or equivalent, in which transport conveyor the pallets moving in the traveling direction move at a different level than the pallets moving in the return direction, and in which method the direction of motion of the pallet (1) is changed keeping the pallet in substantially the same attitude throughout the direction-changing phase in such manner that during direction change the trailing end of the pallet (1) in the direction of travel is guided by positive control from the level of the traveling direction to the other level, **characterized in that** the trailing end of the pallet (1) as seen in the direction of motion is guided by means of a supporting element (8), said supporting element (8) being rotated by means of the pallet immediately following the one whose direction of motion is being changed.

2. A method according to claim 1, **characterized in that** during direction change the trailing end of the pallet (1) as seen in the direction of travel is guided by positive control by means of the supporting element (8) both from the upper level to the lower level and from the lower level to the upper level.

3. A method according to claim 1 or 2, **characterized in that** during direction change the supporting element (8) is rotated by means of the pallet immediately following the one whose direction of motion is being changed.

4. A method according to claim 1 or 2 or 3, **characterized in that** during direction change the supporting element (8) is rotated by means of those wheels (5a, 5b or 6a, 6b) of the pallet immediately following the one whose direction of motion is being changed that come foremost in the direction of travel of the pallet.

5. An apparatus for changing the direction of motion of a pallet (1) moving on wheels (5a, 5b, 6a, 6b) at the end of a transport conveyor or equivalent, in which transport conveyor the pallets (1) are coupled to a power transmission means moving the pallets, such as a cogged belt (2) or a chain, in such manner that the pallets moving in the direction of travel have been arranged to move on a different level than the pallets moving in the return direction, and in which apparatus the direction of motion of the pallet is changed keeping the pallet in substantially the same attitude throughout the direction-changing phase, said apparatus comprising a supporting element (8) arranged to guide during direction change the trailing end of the pallet (1) as seen in the direction of travel by positive control from the level of the traveling direction to the other level, **characterized in that** the supporting element (8) has been arranged to be rotated by means of the pallet immediately following the one whose direction of motion is being changed.

6. An apparatus according to claim 5, **characterized in that** the supporting element is an idler wheel freely rotating on its axle and having in its surface a number of indentations (12) corresponding to the wheels (5a, 5b, 6a, 6b) of the pallet (1).

7. An apparatus according to claim 5 or 6, **characterized in that** the supporting element (8) is placed at the end of the track in such a way that the supporting element (8) can be positively rotated by means of the wheels (5a, 5b, 6a, 6b) of the pallet (1).

8. An apparatus according to claim 5, 6 or 7, **characterized in that** the supporting element (8) is placed at the end of the track in such a way that the supporting element (8) can be positively rotated by means of the wheels (5a, 5b, 6a, 6b) of the pallet immediately following the one whose direction of motion is being changed.

## Patentansprüche

1. Verfahren zum Ändern der Bewegungsrichtung einer Palette (1), die sich auf Rädern (5a, 5b, 6a, 6b) bewegt am Ende eines Transportförderers oder dergleichen, in welchem Transportförderer sich Paletten in Bewegungsrichtung auf einer anderen Höhe bewegen als die Paletten, die sich in Gegenrichtung bewegen, und in welchem Verfahren die Bewegungsrichtung der Paletten (1) geändert wird, wobei die Paletten über die gesamte Richtungsänderungsphase in einer im Wesentlichen gleichen Ausrichtung verbleiben, derart, dass während der Richtungsänderung das nachlaufende Ende der Palette (1) in Fahrrichtung geführt wird durch positive Steuerung von dem Niveau der Fahrrichtung zu dem anderen Niveau, **dadurch gekennzeichnet, dass** das nachlaufende Ende der Palette (1) in Bewegungsrichtung gesehen mittels eines Stützelements (8) geführt wird, welches Stützelement (8) rotiert wird mittels der Palette, die unmittelbar derjenigen folgt, deren Bewegungsrichtung gerade geändert wird.

2. Verfahren nach Anspruch 1, **dadurch gekennzeichnet, dass** während der Richtungsänderung das nachlaufende Ende der Palette (1) in Bewegungsrichtung gesehen durch positive Steuerung mittels des Stützelements (8) geführt wird, sowohl von dem oberen Niveau zum unteren Niveau als auch von dem unteren Niveau zu dem oberen Niveau.

3. Verfahren nach Anspruch 1 oder 2, **dadurch gekennzeichnet, dass** während der Richtungsänderung das Stützelement (8) rotiert wird mittels der Palette, die unmittelbar derjenigen folgt, deren Bewegungsrichtung gerade geändert wird.

4. Verfahren nach Anspruch 1 oder 2 oder 3, **dadurch gekennzeichnet, dass** während der Richtungsänderung das Stützelement (8) durch solche Räder (5a, 5b oder 6a, 6b) der Palette rotiert wird, die unmittelbar derjenigen folgt, deren Bewegungsrichtung gerade geändert wird und in Fahrrichtung der Palette vorausläuft.

5. Vorrichtung zur Änderung der Bewegungsrichtung einer sich auf Rädern (5a, 5b, 6a, 6b) bewegenden Palette (1) an dem Ende eines Transportförderers oder dergleichen, in welchem Transportförderer die Paletten (1) mit einer die Paletten bewegenden Kraftübertragungseinrichtung gekoppelt sind, wie z.B. einem Zahnriemen (2) oder einer Kette, derart, dass die in Fahrrichtung bewegenden Paletten sich auf einem anderen Niveau bewegen als die sich in Gegenrichtung bewegenden Paletten, und in welcher Vorrichtung die Bewegungsrichtung der Paletten geändert wird, wobei die Palette während der Richtungsänderungsphase in einer im Wesentlichen gleichen Ausrichtung verbleibt, welche Vorrichtung ein Stützelement (8) umfasst, welches ausgebildet ist, während der Richtungsänderung das in Fahrrichtung gesehen nachlaufende Ende der Palette (1) durch positive Steuerung von dem Niveau der Fahrrichtung zu dem anderen Niveau zu führen, **dadurch gekennzeichnet, dass** das Stützelement (8) ausgebildet ist, um mittels der Palette rotiert zu werden, die unmittelbar derjenigen folgt, deren Bewegungsrichtung gerade geändert wird.

6. Vorrichtung nach Anspruch 5, **dadurch gekennzeichnet, dass** das Stützelement ein Leitrad ist, das frei rotierbar auf seiner Achse angeordnet ist und das in seiner Umfangsfläche eine Reihe von Einzahnungen (12) hat, die den Rädern (5a, 5b, 6a, 6b) der Palette (1) entsprechen.

7. Vorrichtung nach Anspruch 5 oder 6, **dadurch gekennzeichnet, dass** das Stützelement (8) an dem Ende der Bahn derart angeordnet ist, dass das Stützelement (8) positiv mittels der Räder (5a, 5b, 6a, 6b) der Palette (1) rotiert werden kann.

8. Vorrichtung nach Anspruch 5, 6 oder 7, **dadurch**

**gekennzeichnet, dass** das Stützelement (8) an dem Ende der Bahn derart angeordnet ist, dass das Stützelement (8) positiv rotiert werden kann mittels der Räder (5a, 5b, 6a, 6b) der Palette, die unmittelbar derjenigen folgt, deren Richtung gerade geändert wird.

## Revendications

1. Procédé destiné à changer le sens de déplacement d'une palette (1) se déplaçant sur des roues (5a, 5b, 6a, 6b) à l'extrémité d'un convoyeur de transport ou similaire, dans lequel convoyeur de transport les palettes se déplaçant dans le sens de transport se déplacent à un niveau différent de celui des palettes se déplaçant dans le sens inverse, et dans lequel procédé le sens de déplacement de la palette (1) est modifié en gardant la palette dans une position essentiellement identique tout au long de la phase de changement de sens de telle manière que, pendant le changement de sens, l'extrémité traînée de la palette (1) dans le sens de transport est guidée par commande directe du niveau de sens de transport à l'autre niveau,
   **caractérisé par le fait que** l'extrémité traînée de la palette (1) vue du sens de déplacement est guidée au moyen d'un élément de support (8), ledit élément de support (8) étant tourné au moyen de la palette suivant immédiatement celle dont le sens de déplacement est en train d'être modifié.

2. Procédé selon la revendication 1,
   **caractérisé par le fait que** pendant le changement de sens, l'extrémité traînée de la palette (1) vue du sens de déplacement est guidée par commande directe au moyen d'un élément de support (8), et du niveau supérieur vers le niveau inférieur, et du niveau inférieur vers le niveau supérieur.

3. Procédé selon la revendication 1 ou 2,
   **caractérisé par le fait que** pendant le changement de sens l'élément de support (8) est tourné au moyen de la palette suivant immédiatement celle dont le sens de déplacement est en train d'être modifié.

4. Procédé selon la revendication 1, 2, ou 3,
   **caractérisé par le fait que** pendant le changement de sens l'élément de support (8) est tourné au moyen de ces roues (5a, 5b ou a, 6b) de la palette suivant immédiatement celle dont le sens de déplacement est en train d'être modifié qui viennent en première position dans le sens de transport de la palette.

5. Appareil destiné à changer le sens de déplacement d'une palette (1) se déplaçant sur roues (5a, 5b, 6a, 6b) à l'extrémité d'un convoyeur de transport ou similaire, dans lequel convoyeur de transport les palettes (1) sont couplées à un moyen de transmission d'énergie déplaçant les palettes, tel qu'une courroie dentée (2) ou une chaîne, de telle manière que les palettes se déplaçant dans le sens du déplacement ont été conçues pour se déplacer sur un niveau différent de celui des palettes se déplaçant dans le sens inverse, et dans lequel appareil le sens de déplacement de la palette est modifié en gardant la palette dans une position essentiellement identique tout au long de la phase de changement de sens, ledit appareil comportant un élément de support (8) conçu pour guider pendant le changement de sens l'extrémité traînée de la palette (1) vue dans le sens de transport par commande directe du niveau de sens de transport à l'autre niveau,
   **caractérisé par le fait que** l'élément de support (8) a été conçu pour être tourné au moyen de la palette suivant immédiatement celle dont le sens de déplacement est en train d'être modifié.

6. Appareil selon la revendication 5,
   **caractérisé par le fait que** l'élément de support est une roue à rouleau à rotation libre sur son axe et ayant sur sa surface un nombre d'indentations (12) correspondant aux roues (5a, 5b, 6a, 6b) de la palette (1).

7. Appareil selon la revendication 5 ou 6,
   **caractérisé par le fait que** l'élément de support (8) est placé à l'extrémité du tapis de telle sorte que l'élément de support (8) peut être tourné de manière directe au moyen des roues (5a, 5b, 6a, 6b) de la palette (1).

8. Appareil selon la revendication 5, 6 ou 7,
   **caractérisé par le fait que** l'élément de support (8) est placé à l'extrémité du tapis de telle sorte que, l'élément de support (8) puisse être tourné de manière directe au moyen des roues (5a, 5b, 6a, 6b) de la palette suivant immédiatement celle dont le sens de déplacement est en train d'être modifié.

Fig. 1

Fig. 2

Fig. 3

Fig. 4

**EP 1 680 347 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2299316 A